# EUROPÄISCHE PATENTSCHRIFT

(11) **EP 0 898 062 B1**
(45) Veröffentlichungstag und Bekanntmachung des Hinweises auf die Patenterteilung: **14.05.2003**
(21) Anmeldenummer: 98112041.3
(22) Anmeldetag: 30.06.1998
(51) Int. Cl.: F02B 75/20, F02B 75/22, F02B 69/00

(54) **Baureihe von Hubkolben-Brennkraftmaschinen in Reihen- oder V-Bauweise mit unterschiedlicher Anzahl von Zylindern**
Construction of line-and V type internal combustion engines with various numbers of cylinders
Construction de moteurs à combustion interne avec ses cylindres rangés en ligne ou en V aux alésages divers

(30) Priorität: 09.08.1997 DE 19734608
(43) Veröffentlichungstag der Anmeldung: 24.02.1999
(73) Patentinhaber: Ford Global Technologies, Inc., A subsidiary of Ford Motor Company, Dearborn, Michigan 48126 (US)
(72) Erfinder: Gerlach, Stefan, 53819 Neukirchen-Seelscheid (DE)
(74) Vertreter: Drömer, Hans-Carsten, Dipl.-Ing.

(56) Entgegenhaltungen:
- DE-A- 3 522 988
- DE-A- 4 025 927
- DE-A- 4 431 798
- US-A- 5 373 630

## Beschreibung

Die Erfindung bezieht sich auf eine Baureihe von Hubkolben-Brennkraftmaschinen in Reihen- oder V-Bauweise mit unterschiedlicher Anzahl von Zylindern zur Bereitstellung unterschiedlicher Hubraumvolumen.

Aus der DE-40 25 927 A1 ist eine Baureihe von Hubkolben-Brennkraftmaschinen in V-Bauweise mit einem Gabelwinkel von 90° zwischen den beiden in Achsrichtung der Brennkraftmaschine zueinander einen Zylinderversatz aufweisenden Zylindern mit sechs und einer höheren geraden Anzahl von Zylindern bekannt, bei der durch die Beibehaltung der Zylinderabstände eine Baureihe von Brennkraftmaschinen mit unterschiedlichen Hubraumvolumen unter Beibehaltung der Fertigungsanlagen und möglichst vieler gleicher Bauteile mit geringen Kosten erreicht werden soll.

Darüber hinaus ist es dem Fachmann auf dem Gebiet des Motorenbaues bekannt, daß er bei der Konstruktion einer Brennkraftmaschine bereits Ausführungen mit unterschiedlicher Anzahl von Zylindern berücksichtigt und er dies insbesondere auch bei der Auslegung der für die Bearbeitung der Bauteile der Brennkraftmaschine erforderlichen Fertigungsanlagen von vorne herein mit eingeplant.

So ist es dem Fachmann selbstverständlich, daß er bei einer Baureihe von Hubkolben-Brennkraftmaschinen in Reihenbauweise bei der in der Baureihe sowohl eine Vierzylinder- als auch eine Fünfzylinder-Ausführung vorgesehen ist, er die entsprechenden Fertigungsanlagen für den Zylinderkopf und den Zylinderblock durch unterschiedliche Zentrieraufnahmen und Spanneinrichtungen derart flexibel auslegt, daß auf den entsprechenden Transferstraßen sowohl die Zylinderköpfe und die Zylinderblöcke der Vierzylinder- als die der Fünfzylinder-Ausführung bearbeitet werden können.

Die immer schärfer werdenden Forderungen nach reduziertem Treibstoffverbrauch in Brennkraftmaschinen hat in letzter Zeit dazu geführt, daß neue Brennkraftmaschinen mit einer geringeren Anzahl von Zylindern und geringerem Hubraumvolumen entwikkelt werden mußten.

Sofern dies im Zuge einer völligen Neuentwicklung einer Baureihe erfolgte, konnte man die dem Fachmann geläufigen Maßnahmen der frühzeitigen Berücksichtigung einer gemeinsamen Fertigung von z.B. einem Dreizylinder und einem VierzylinderMotor in üblicher Weise umsetzen.

Sofern dies jedoch infolge betrieblicher Belange, z.B. durch geringe angepeilte Stückzahlen oder durch einzuhaltende möglichst geringe Entwicklungs- und Investitionskosten nicht möglich war, blieb im üblichen Rahmen nur die Neu-Konstruktion z.B. einer Dreizylinder-Brennkraftmaschine und die Erstellung einer eigenen Fertigungsanlage für diese Ausführung offen.

Die Aufgabe der Erfindung ist es, von diesem ungünstigen Ausgangspunkt, einer bereits bestehenden Fertigungsanlage für z.B. einer Vierzylinder-Brennkraftmaschine eine Lösung aufzuzeigen, mit der mit geringem Konstruktions- und Investitionsaufwand die kostengünstige Entwicklung und Fertigung einer Brennkraftmaschine mit einer reduzierten Anzahl von Zylindern z.B. einer Dreizylinder-Brennkraftmaschine möglich ist.

Gemäß der Erfindung wird diese Aufgabe gelöst, indem, ausgehend von einem Zylinderblock mit einer größerer Anzahl von Zylindern, ein Zylinderblock mit einer geringeren Anzahl von Zylindern, jedoch mit den gleichen Zylinderabständen, erstellt wird, wobei die Gesamtlänge des Zylinderblocks mit geringerer Anzahl von Zylindern auf seiner Aufspannebene der Länge des Zylinderblockes mit größerer Anzahl der Zylinder entspricht und wobei in dem im Kurbelgehäuse freibleibenden Raum der Antrieb einer Ausgleichswelle mit umittelbarem Antrieb durch einen Abschnitt der Kurbelwelle angeordnet ist und daß die Ausgleichswelle in Form einer, an sich bekannten Ausgleichs gewichte annehmenden Rohrwelle ausgebildet ist.

Dadurch kann mit einem geringen Konstruktionsaufwand, indem z.B. die gesamte Nebenaggregateantriebsanordnung auf der Stirnseite der Brennkraftmaschine beibehalten werden kann, bei geringem Investitionsaufwand die Bearbeitung des geänderten Zylinderblockes mit gleicher Aufspannlänge auf der Fertigungsanlage für den Zylinderblock mit größerer Anzahl von Zylindern durchgeführt werden.

Es ist verständlich, daß sich durch dieses Vorgehen, die durch eine Verringerung der Anzahl der Zylinder an sich erzielbaren Vorteile, wie Gewichtsreduzierung oder Verringerung der Baulänge, nicht mehr voll erreichen lassen, andererseits eröffnet dieses Vorgehen eine beachtliche Einsparung an Konstruktions- und Investitionsaufwand und der in Höhe der Kurbelwelle verbleibende, freie Bauraum ermöglicht die zweckmäßige Anordnung des Antriebs eines Zusatzaggregates oder einer Ausgleichswellenanordnung, wie sie z.B. für eine Dreizylinder-Brennkraftmaschine zumeist erforderlich ist.

Die Erfindung wird anhand einer in den beiliegenden Zeichnungen gezeigte Ausführungsform näher erläutert. Es zeigt:
- Fig.1: einen vertikalen Schnitt durch eine erfindungsgemäße Dreizylinder-Brennkraftmaschine auf der Aufspannbasis einer Vierzylinder-Brennkraftmaschine;
- Fig.2: einen vertikalen Schnitt durch die die Basis bildende Vierzylinder-Brennkraftmaschine und
- Fig.3: einen vertikalen Schnitt durch eine Dreizylinder-Brennkraftmaschine in herkömmlicher Konstruktion, bei der eine erforderliche Ausgleichswelle mit entsprechendem Aufwand in der Motorölwanne angeordnet werden muß.

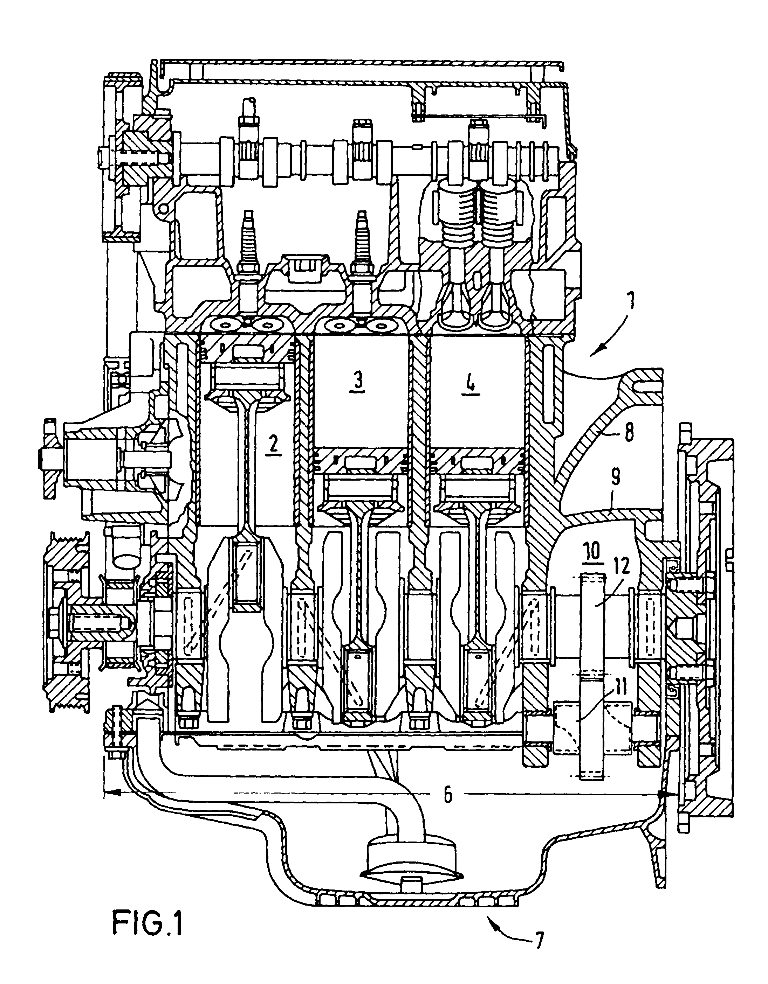

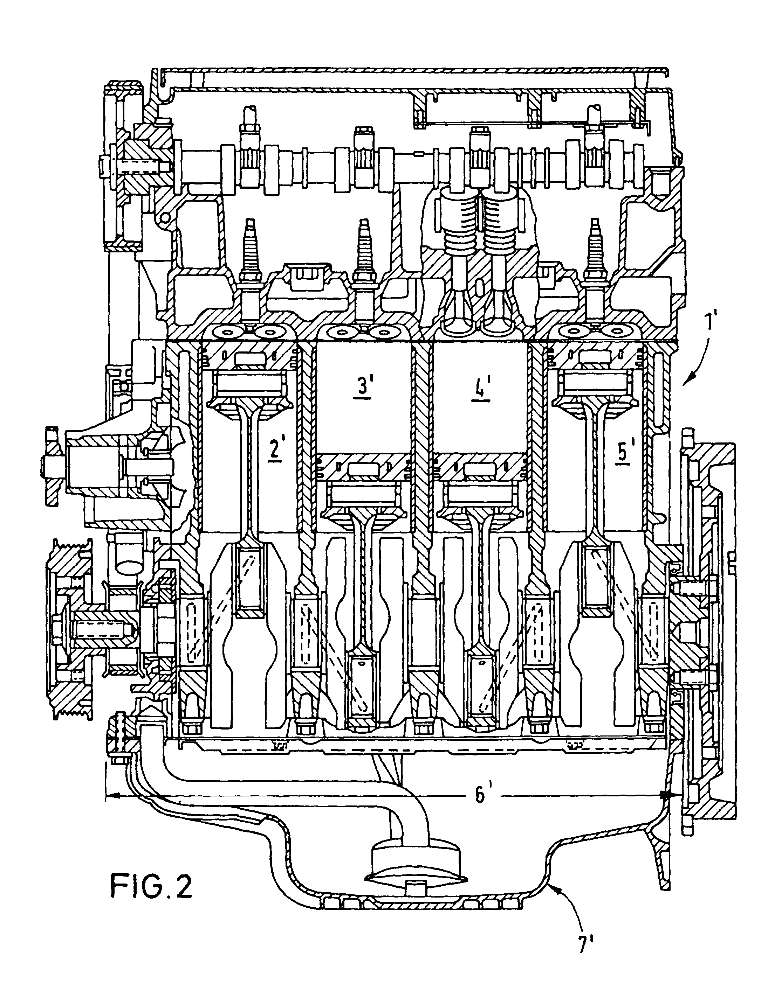

Wie aus einem Vergleich der Fig. 1 und 2 ersichtlich wird, weist der Zylinderblock 1 der Dreizylinder-Brennkraftmaschine in Fig. 1 im Vergleich zum Zylinderblock 1' der Vierzylinder-Brennkraftmaschine in Fig. 2 nur im Bereich der Zylinder 2, 3 und 4 eine kürzere Baulänge auf, wohingegen er im Bereich der Aufspannebene 6 die gleiche Länge aufweist wie die Vierzylinder-Brennkraftmaschine in Fig. 2 bei 6'.

Dementsprechend kann bei beiden Brennkraftmaschinen die Schmiermittelversorgung aus der Ölwanne und die Ölwanne selbst gleich bleiben.

Am Zylinderblock 1 der Dreizylinder-Brennkraftmaschine ist eine entsprechende Anpassung des hinteren Teiles erforderlich, und dies wird durch entsprechende Wandungsteile 8 und 9 vorgenommen, die die übliche Verbindung mit der Getriebeeinheit herstellen. In dem durch die Trennwand 9 vom Kupplungsbereich aufgetrennten, freibleibenden Raum 10 kann in günstiger Weise der Antrieb eines Zusatzaggregates oder einer Ausgleichswelle 11 angeordnet werden, die vorzugsweise unmittelbar von dem freien Abschnitt 12 der Kurbelwelle der Brennkraftmaschine angetrieben werden kann.

Die Ausgleichswelle 11 kann hierbei vorzugsweise in Form einer an sich bekannten, Ausgleichsgewichte aufnehmenden Hohlwelle ausgebildet sein, bei der infolge des verfügbaren relativ großen Durchmessers event. ein Ausgleich der Wankmomente trotz kurzer Wellenbaulänge möglich erscheint.

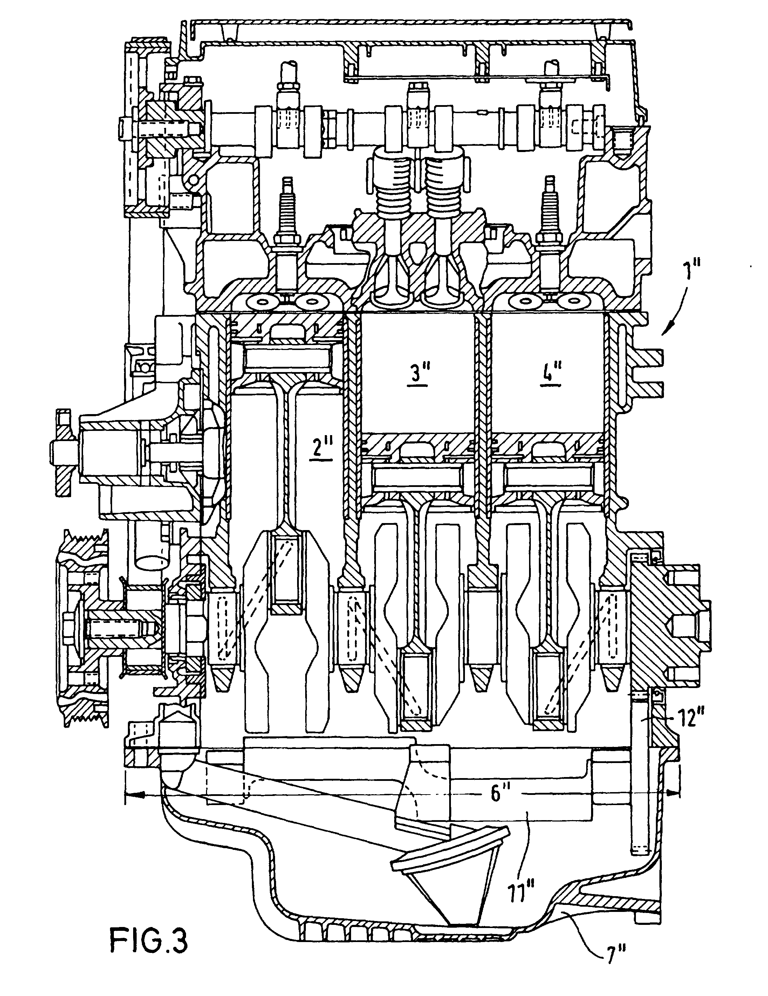

Wie aus Fig. 3 ersichtlich wird, kann bei einer vollständigen Neukonstruktion zwar der Motorblock 1" kürzer ausgebildet werden, hierdurch wird jedoch die Aufspannebene 6" ebenfalls kürzer und macht die Entwicklung einer eigenen Fertigungsanlage für diesen Zylinderblock erforderlich. Ebenso muß die Motorölwanne 7'' umgestaltet werden und die Anordnung einer erforderlichen Ausgleichswelle 11" mit ihrem Antrieb 12" vom Ende Kurbelwelle aus muß in der Motorölwanne erfolgen.

Durch die erfindungsgemäße Ableitung einer Brennkraftmaschine mit einer geringeren Anzahl von Zylindern (N-1 bzw. N-2) von einer Brennkraftmaschine mit einer größeren Anzahl von Zylindern (N), werden zwar nicht alle durch die Verringerung eines Zylinders erzielbaren Vorteile, wie Gewichtsreduzierung, Reibungsminderung und Platzeinsparung erzielt, die Vorteil, die bei der Beibehaltung eines größeren Umfanges von gleichbleibenden Teilen einer Brennkraftmaschine und bei der Ausnutzung von bereits vorhandenen Fertigungsanlagen und der einfacheren Abstimmung der Unterbringung der Brennkraftmaschine im Kraftfahrzeug erzielt werden, wiegen die aufgegebenen Vorteile jedoch bei weitem auf.

So kann z.B. der gesamte aufwendige Antrieb der Nebenaggregate an der Stirnseite der Brennkraftmaschine vollständig und ohne irgendwelche Änderungen beibehalten und übernommen werden. Das gleiche gilt für die Aufnahmepunkte für die Motorlagerungen im Kraftfahrzeug und ebenso ist für die Unterbringung im Kraftfahrzeug, die als "Package" bezeichnet wird, keine umfangreiche Änderung erforderlich, weil sie gemäß der Erfindung fast unverändert übernommen werden kann.

Ein besonderer Vorteil ergibt sich noch dann, wenn aus verkaufsstrategischen Gründen in einem Kraftfahrzeug die Möglichkeit vorgesehen wird, daß ein bestimmtes Kraftfahrzeugmodell sowohl mit einer Brennkraftmaschine mit drei als auch mit vier Zylindern bei unterschiedlichem Hubraumvolumen bestellt werden kann, um den unterschiedlichen Kundenwünschen gerecht zu werden, da dann, durch die Beibehaltung der Package-Fixpunkte bei der Anordnung der unterschiedlichen Brennkraftmaschinen, die Kosten für eine entsprechende Anpassung entfallen können.

## Patentansprüche

1. Baureihe von Hubkolben- Brennkraftmaschinen in Reihen- oder V- Bauweise mit unterschiedlicher Anzahl von Zylindern zur Bereitstellung unterschiedlicher Hubraumvolumen, wobei ausgehend von einem Zylinderblock (1') mit einer größeren Anzahl (N) von Zylindern ein Zylinderblock (1) mit einer geringeren Anzahl (N-1 bzw. N-2) von Zylindern, jedoch mit den gleichen Zylinderabständen, erstellt wird, wobei die Gesamtlänge des Zylinderblockes (1) mit geringerer Anzahl (N-1 bzw. N-2) von Zylindern auf seiner Aufspannebene (6) der Länge des Zylinderblockes (1') mit der größeren Anzahl (N) der Zylinder entspricht,
**dadurch gekennzeichnet, daß**
in dem im Kurbelgehäuse freibleibenden Raum (10) der Antrieb einer Ausgleichswelle (11) mit unmittelbarem Antrieb durch einen Abschnitt (12) der Kurbelwelle angeordnet ist und daß die Ausgleichswelle (11) in Form einer, an sich bekannten Ausgleichsgewichte annehmenden Rohrwelle ausgebildet ist.

## Claims

1. Series of in-line or V-type reciprocating-piston internal combustion engines with different numbers of cylinders to provide different displacement volumes, in which, starting with a cylinder block (1') with a relatively large number (N) of cylinders, a cylinder block (1) with a smaller number (N-1 or N-2) of cylinders but with the same cylinder spacings is produced, the total length of the cylinder block (1) with a smaller number (N-1 or N-2) of cylinders corresponding over its mounting length (6) to the length of the cylinder block (1') with the larger number (N) of cylinders, **characterized in that** the drive of a balancer shaft (11) with direct drive by a section (12) of the crankshaft is arranged in the space (10) that remains free in the crankcase, and **in that** the balancer shaft (11) is in the form of a tubular shaft, which accepts balance weights in a manner known per se.

## Revendications

1. Construction de moteurs alternatifs à combustion interne en ligne ou en V avec un nombre divers de cylindres, pour fournir divers volumes de cylindrée unitaire, où, à partir d'un bloc cylindres (1') avec un nombre (N) plus important de cylindres, on crée un bloc cylindres (1) avec un nombre (N-1 ou N-2) moins important de cylindres, mais avec les mêmes distances entre cylindres, la longueur totale du bloc cylindres (1) avec un nombre (N-1 ou N-2) moins important de cylindres sur son plan de fixation (6) correspondant à la longueur du bloc cylindres (1') avec le nombre (N) plus important de cylindres,
**caractérisée en ce que**
dans l'espace (10) libre restant dans le carter moteur est prévu l'entraînement d'un arbre d'équilibrage (11) avec un entraînement direct par une portion (12) du vilebrequin et **en ce que** l'arbre d'équilibrage (11) est réalisé sous la forme d'un arbre tubulaire recevant de manière connue en soi des poids d'équilibrage.
